# FASCICULE DE BREVET EUROPEEN

(11) **EP 3 349 995 B1**
(45) Date de publication et mention de la délivrance du brevet: **11.03.2020**
(21) Numéro de dépôt: 16765999.4
(22) Date de dépôt: 15.09.2016
(51) Int. Cl.: B60C 9/18, B60C 9/04, B60C 9/00, B60C 9/02, B60C 13/00, B60C 9/08, C22C 38/18

(54) **PNEUMATIQUE COMPORTANT DES CABLES D'ARMATURES DE CARCASSE PRESENTANT UN BAS TAUX DE CARBONE**
REIFEN MIT KARKASSENVERSTÄRKUNGSCORD MIT EINEM NIEDRIGEN KOHLENSTOFFGEHALT
TYRE COMPRISING CARCASS REINFORCEMENT CORDS HAVING A LOW CARBON CONTENT

(30) Priorité: 16.09.2015 FR 1558685
(43) Date de publication de la demande: 25.07.2018
(73) Titulaire: Compagnie Générale des Etablissements Michelin, 63000 Clermont-Ferrand (FR)
(72) Inventeur: VERLEENE, Arnaud, 63040 Clermont-Ferrand Cedex 9 (FR); JOULIN, Emmanuel, 63040 Clermont-Ferrand Cedex 9 (FR)
(74) Mandataire: Le Cam, Stéphane Georges Elie
(86) Numéro de dépôt international: PCT/EP2016/071787
(87) Numéro de publication internationale: WO 2017/046221

(56) Documents cités:
- WO-A1-2015/004204
- FR-A1- 2 853 660

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier est pénalisée. Pour autoriser un voire deux rechapages de tels pneumatiques afin d'allonger leur durée de vie, il est nécessaire de conserver une structure et notamment une armature de carcasse dont les propriétés d'endurance sont suffisantes pour supporter lesdits rechapages.

Les roulages prolongés dans des conditions particulièrement sévères des pneumatiques ainsi construits font effectivement apparaître des limites en termes d'endurance de ces pneumatiques.

Les éléments de l'armature de carcasse sont notamment soumis à des contraintes de flexion et compression lors des roulages qui vont à l'encontre de leur endurance. Les câbles qui constituent les éléments de renforcement des couches de carcasse sont en effet soumis à des contraintes importantes lors du roulage des pneumatiques, notamment à des flexions ou variations de courbure répétées induisant au niveau des fils des frottements, et donc de l'usure, ainsi que de la fatigue ; Ce phénomène est qualifié de "fatigue-fretting".

Pour remplir leur fonction de renforcement de l'armature de carcasse du pneumatique, lesdits câbles doivent tout d'abord présenter une bonne flexibilité et une endurance élevée en flexion, ce qui implique notamment que leurs fils présentent un diamètre relativement faible, de préférence inférieur à 0,28 mm, plus préférentiellement inférieur à 0,25 mm, plus petit généralement que celui des fils utilisés dans les câbles conventionnels pour les armatures de sommet des pneumatiques.

Les câbles de l'armature de carcasse sont également sujets à des phénomènes dits de "fatigue-corrosion" dus à la nature même des câbles qui favorisent le passage voire drainent des agents corrosifs tels que l'oxygène et l'humidité. En effet, l'air ou l'eau qui pénètrent dans le pneumatique par exemple lors d'une dégradation lors d'une coupure ou plus simplement du fait de la perméabilité, même faible de la surface intérieur du pneumatique, peuvent être conduits par les canaux formés au sein des câbles du fait même de leur structure.

Tous ces phénomènes de fatigue que l'on regroupe généralement sous le terme générique de "fatigue-fretting-corrosion" sont à l'origine d'une dégénérescence progressive des propriétés mécaniques des câbles et peuvent affecter, pour les conditions de roulage les plus sévères, la durée de vie de ces derniers.

Pour améliorer l'endurance de ces câbles de l'armature de carcasse, il est notamment connu d'augmenter l'épaisseur de la couche de caoutchouc qui forme la paroi interne de la cavité du pneumatique pour limiter au mieux la perméabilité de ladite couche. Cette couche est habituellement pour partie composée de butyle de façon à augmenter l'étanchéité du pneumatique. Ce type de matériau présente l'inconvénient d'augmenter le coût du pneumatique.

Il est encore connu de modifier la construction desdits câbles afin notamment d'augmenter leur pénétrabilité par le caoutchouc, et ainsi limiter la dimension du passage des agents oxydants.

Il s'avère que ces solutions permettent d'améliorer les performances d'endurance des pneumatiques mais le plus souvent avec des coûts de fabrication desdits pneumatiques plus importants.

Le document FR 2 853 660 décrit des composites métal/caoutchouc dans lequel il est préconisé l'utilisation de câbles de diamètre inférieur à 0.7 mm.

Le document WO 2015/004204 décrit des câbles d'armature de caracsse présentant un diamètre égal à 0.95 mm.

Les inventeurs se sont ainsi donnés pour mission de fournir des pneumatiques pour véhicules lourds de type "Poids-Lourds", dont les performances d'endurance sont améliorées notamment au regard des phénomènes de "fatigue-corrosion" ou de "fatigue-fretting-corrosion", quelles que soient les conditions de roulage et dont le coût de fabrication est réduit.

Ce but a été atteint selon l'invention par un pneumatique à armature de carcasse radiale, constituée d'au moins une couche d'éléments de renforcement métalliques, dont le diamètre au seat est strictement supérieur à 19.5 pouces, ledit pneumatique comprenant une armature de sommet, elle-même coiffée radialement d'une bande de roulement, ladite bande de roulement étant réunie à deux bourrelets par l'intermédiaire de deux flancs, les éléments de renforcement métalliques de ladite au moins une couche de l'armature de carcasse étant des câbles à couches constitués de plusieurs fils d'acier présentant un taux de carbone en masse C tel que 0.01 % ≤ C < 0.4 %, ladite au moins une couche d'armature de carcasse présentant une force rupture par unité de largeur comprise entre 35 daN/mm et 75 daN/mm et le diamètre desdits câbles étant supérieur à 0.7 mm.

Au sens de l'invention, le diamètre au seat d'un pneumatique est le diamètre de la jante de montage adaptée tel qu'il est décrit dans le manuel ETRTO.

La force rupture par unité de largeur d'une couche d'éléments de renforcement est déterminée à partir des mesures effectuées sur les éléments de renforcement et de la densité d'éléments de renforcement de la couche, elle-même définie par le nombre d'éléments de renforcement par unité de largeur.

La mesure de densité s'effectue en comptant visuellement le nombre de fils présents sur un échantillon de tissu non déformé d'une largeur de 10 cm. Le nombre de fils comptés est directement la valeur de densité du tissu en fils/dm. La mesure est effectuée dans la zone du bourrelet du pneumatique, radialement à l'intérieur de la tringle.

En ce qui concerne les câbles métalliques, les mesures de propriétés mécaniques et notamment les mesures de force à la rupture (charge maximale en N) sont effectuées en traction selon la norme ISO 6892 de 1984.

Les mesures de propriétés mécaniques des éléments de renforcement sont réalisées sur pneumatique neuf.

Au sens de l'invention, les câbles dits "à couches" ("layered cords") ou "multicouches" sont des câbles constitués d'une âme centrale et d'une ou plusieurs couches de fils concentriques disposées autour de cette âme.

Les câbles de l'armature de carcasse des pneumatiques selon l'invention peuvent être des câbles frettés ou non frettés. Au sens de l'invention, le diamètre du câble qui selon l'invention est supérieur à 0.7 mm est le diamètre du câble mesuré sans prendre en compte la frette si celle-ci est présente.

Les inventeurs ont su mettre en évidence qu'un pneumatique ainsi réalisé selon l'invention conduit à des améliorations en termes de compromis endurance coûts de fabrication très intéressantes. En effet, les propriétés d'endurance avec un tel pneumatique sont au moins aussi bonnes qu'avec les meilleures solutions évoquées ci-dessus quelles que soient les conditions de roulage. Les câbles de l'armature de carcasse étant constitués de plusieurs fils d'acier présentant un taux de carbone en masse C tel que 0.01 % ≤ C < 0.4 % permettent de limiter les risques d'oxydation des renforts de l'armature de carcasse qui peuvent apparaître lors des roulages. Par ailleurs, la force rupture par unité de largeur d'une couche d'armature de carcasse comprise entre 35 daN/mm et 75 daN/mm et le diamètre desdits câbles de ladite couche d'armature de carcasse supérieur à 0.7 mm qui traduisent une quantité de métal réduite par rapport à des pneumatiques usuelles conduisent à un coût de fabrication du pneumatique inférieur à celui d'un pneumatique usuel. La force rupture par unité de largeur d'une couche d'armature de carcasse d'un pneumatique est usuellement supérieure à 75 daN/mm. Pour l'homme du métier une réduction de la quantité de métal dans l'armature de carcasse signifie une diminution des performances d'endurance du pneumatique qui ne peut pas être envisagée. L'armature de carcasse telle que définie par l'invention permet de combiner à la fois une réduction des coûts par une réduction de la masse métallique du pneumatique et la conservation de performances d'endurance au vu notamment des phénomènes de "fatigue-corrosion" ou de "fatigue-fretting-corrosion" par l'utilisation de câbles de l'armature de carcasse constitués de fils d'acier présentant un taux de carbone en masse C tel que 0.01 % ≤ C < 0.4 %.

De préférence selon l'invention, lesdits fils d'acier présentent une contrainte maximale avant rupture R, exprimée en MPa, telle que R ≥ 175 + 930.C - 600.ln(d) et R ≥ 1500 MPa.

La contrainte maximale à la rupture ou limite de rupture correspond à la force nécessaire pour faire rompre le fil. Les mesures de contrainte maximale avant rupture notée R (en MPa) sont effectuées selon la norme ISO 6892 de 1984.

Même si la contrainte maximale avant rupture peut être dans certains cas inférieure à celle de fils de l'état de la technique présentant un taux de carbone en masse C plus élevé, le fil selon l'invention est beaucoup moins sensible à la fatigue et à la corrosion ce qui améliore l'endurance du pneumatique et compense son éventuel déficit initial en contrainte maximale avant rupture.

De plus, le taux de carbone en masse C étant relativement faible, on améliore la tréfilabilité du fil, c'est-à-dire la possibilité d'écrouir suffisamment le fil par tréfilage pour lui conférer des propriétés de résistance mécaniques importantes et notamment une contrainte maximale avant rupture satisfaisante. Il peut ainsi être possible de réduire le diamètre du fil, et donc alléger le pneumatique, tout en conservant une résistance mécanique suffisante pour renforcer le pneumatique.

De préférence encore selon l'invention, lesdits fils d'acier présentent un taux de chrome en masse Cr tel que Cr < 12 %.

L'utilisation d'un faible taux de chrome Cr permet d'obtenir un fil présentant des avantages en termes de contraintes liées à l'environnement. En effet, l'utilisation de chrome nécessite l'emploi de mesures spécifiques coûteuses, notamment lors du recyclage des tels fils, ce qui peut être évité grâce au fil selon l'invention.

Avantageusement selon l'invention, la micro-structure de l'acier est intégralement de la ferrite, de la perlite ou un mélange de ces microstructures.

Ainsi, la micro-structure de l'acier est dépourvue de martensite et/ou de bainite. Une microstructure ferrito-martensitique entraine des décohésion entre les phases ferritique et martensitique ce qui n'est pas souhaitable. Une microstucture martensitique n'est pas suffisamment ductile pour permettre un tréfilage du fil qui casserait trop fréquemment.

On distingue une micro-structure ferritique, perlitique ou ferrito-perlitique d'une autre micro-structure, en particulier martensitique ou bainitique par observation métallo graphique. La micro-structure ferrito-perlitique présente des grains de ferrite ainsi que des zones perlitiques lamellaires. Au contraire, la micro-structure martensitique comprend des lattes et/ou des aiguilles que l'homme du métier saura distinguer des grains et des lamelles des micro-structures ferrito-perlitique et perlitique.

Plus préférentiellement selon l'invention, la microstructure de l'acier est intégralement ferrito-perlitique.

Lesdits fils selon l'invention sont en acier, c'est-à dire qu'ils sont constitués majoritairement (c'est-à-dire pour plus de 50% en masse) ou intégralement (pour 100% en masse) d'acier tel que défini dans la norme NF EN 10020. Conformément à cette norme, un acier est un matériau contenant plus de fer que tout autre élément et dont la teneur en carbone est inférieure à 2% et qui contient d'autres éléments d'alliages. Toujours conformément à cette norme, l'acier comprend éventuellement d'autres éléments d'alliages.

De préférence, l'acier est un acier non allié tel que défini dans la norme NF EN10020. Ainsi, l'acier comprend, en plus du carbone et du fer, d'autres éléments alliages connus dans des quantités conformes à la norme NF EN10020.

Dans un autre mode de réalisation, l'acier est un acier allié tel que défini dans la norme NF EN10020. Dans ce mode de réalisation, l'acier comprend, en plus du carbone et du fer, d'autres éléments alliages connus.

De préférence, l'acier n'est pas un acier inoxydable tel que défini dans la norme NF EN10020. Ainsi, dans ce mode de réalisation, l'acier comprend préférentiellement au plus 10,5% en masse de chrome.

Avantageusement, le fil présente un taux de carbone en masse C tel que 0,07 % ≤ C ≤ 0,3 %, de préférence 0,1 % ≤ C ≤ 0,3 % et plus préférentiellement 0,15 % ≤ C ≤ 0,25 %.

Avantageusement, R ≥ 350 + 930.C - 600.ln(d), de préférence R ≥ 500 + 930.C - 600.ln(d), plus préférentiellement R ≥ 700 + 930.C - 600.ln(d).

Avantageusement, d est supérieur ou égal à 0,10 mm et de préférence à 0,12 mm.

Lorsque le diamètre d est trop petit, le coût de revient industriel du fil devient trop important et incompatible avec une production de masse.

Dans certains modes de réalisation, d > 0,15 mm et R ≥ 1800 MPa et de préférence d > 0,15 mm et R ≥ 1900 MPa.

Avantageusement, d est inférieur ou égal à 0,40 mm, de préférence à 0,25 mm, plus préférentiellement à 0,23 mm et encore plus préférentiellement à 0,20 mm.

Lorsque le diamètre d est trop grand, la flexibilité et l'endurance du fil sont trop faibles pour une utilisation du fil dans certaines nappes du pneumatique, notamment l'armature de carcasse, par exemple pour véhicule de type poids lourd.

Dans certains modes de réalisation, d ≤ 0,15 mm et R ≥ 2000 MPa et de préférence d ≤ 0,15 mm et R ≥ 2100 MPa.

Selon un mode de réalisation de l'invention, les éléments de renforcement métalliques d'au moins une couche de l'armature de carcasse sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20.

De préférence, le diamètre des fils de la première couche de la couche interne (C1) est compris entre 0.10 et 0.4 mm et le diamètre des fils des couches externes (C2, C3) est compris entre 0.10 et 0.4 mm.

De préférence encore, le pas d'hélice d'enroulement desdits fils de la couche externe (C3) est compris entre 8 et 25 mm.

Au sens de l'invention, le pas représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Dans la construction L+M+N selon l'invention, la couche intermédiaire C2 comporte de préférence six ou sept fils, et le câble conforme à l'invention présente alors les caractéristiques préférentielles suivantes (d₁, d₂, d₃, p₂ et p₃ en mm) :

| | |
|---|---|
| - (i) | 0,10 < d₁ < 0,28 ; |
| - (ii) | 0,10 < d₂ < 0,25 ; |
| - (iii) | 0,10 < d₃ < 0,25 ; |
| - (iv) | M = 6 ou M = 7 ; |
| - (v) | 5 π (d₁ + d₂) < p₂ ≤ p₃ < 5 π (d₁ + 2d₂ + d₃) ; |
| - (vi) | les fils desdites couches C2, C3 sont enroulés dans le même sens de torsion (S/S ou Z/Z). |

De préférence, la caractéristique (v) est telle que p₂ = p₃, de telle sorte que le câble est dit compact compte tenu par ailleurs de la caractéristique (vi) (fils des couches C2 et C3 enroulés dans le même sens).

Selon la caractéristique (vi), tous les fils des couches C2 et C3 sont enroulés dans le même sens de torsion, c'est-à-dire soit dans la direction S (disposition "S/S"), soit dans la direction Z (disposition "Z/Z"). L'enroulement dans le même sens des couches C2 et C3 permet avantageusement, dans le câble conforme à l'invention, de minimiser les frottements entre ces deux couches C2 et C3 et donc l'usure des fils qui les constituent (puisqu'il n'y a plus de contact croisé entre les fils).

De préférence, le câble de l'invention est un câble à couches de construction notée 1+M+N, c'est-à-dire que sa couche interne C1 est constituée d'un seul fil.

Les fils des couches C2 et C3 peuvent avoir un diamètre identique ou différent d'une couche à l'autre. On utilise de préférence des fils de même diamètre (d2=d3), notamment pour simplifier le procédé de câblage et abaisser les coûts.

L'invention est de préférence mise en œuvre avec un câble choisi parmi les câbles de structure 3+9, 1+4+8, 1+4+9, 1+4+10, 1+5+9, 1+5+10, 1+5+11,1+6+10, 1+6+11, 1+6+12, 1+7+11, 1+7+12 ou 1+7+13.

Selon une variante avantageuse de l'invention, les éléments de renforcement métalliques d'au moins une couche de l'armature de carcasse sont des câbles non frettés présentant au test dit de perméabilité un débit inférieur à 20 cm³/mn.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

L'utilisation de tels câbles, fortement pénétrés par les mélanges caoutchouteux, permet encore d'améliorer les performances d'endurance du pneumatique au regard des risques d'oxydation, les flux d'agents oxydants étant fortement limités voire inexistants au sein des câbles.

Selon un mode de réalisation préféré de l'invention, les câbles de l'armature de carcasse présentent au test dit de perméabilité un débit inférieur à 10 cm³/mn et de préférence encore inférieur à 2 cm³/mn.

De préférence encore selon l'invention, les éléments de renforcement métalliques d'au moins une couche de l'armature de carcasse sont des câbles à au moins deux couches, au moins une couche interne étant gainée d'une couche constituée d'une composition de caoutchouc réticulable ou réticulée, de préférence à base d'au moins un élastomère diénique.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine est réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans le câble de l'invention :
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, la présente invention est en premier lieu mise en œuvre avec des élastomères diéniques essentiellement insaturés, en particulier du type (a) ou (b) ci-dessus.

Ainsi, l'élastomère diénique est préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

De préférence encore selon l'invention, l'élastomère diénique choisi est majoritairement (c'est-à-dire pour plus de 50 pce) constitué d'un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Selon un mode avantageux de l'invention, l'élastomère diénique choisi est exclusivement (c'est-à-dire pour 100 pce) constitué de caoutchouc naturel, de polyisoprène de synthèse ou d'un mélange de ces élastomères, le polyisoprène de synthèse ayant un taux (% molaire) de liaisons cis-1,4 de préférence supérieur à 90%, plus préférentiellement encore supérieur à 98%.

On pourrait aussi utiliser, selon un mode de réalisation particulier de l'invention, des coupages (mélanges) de ce caoutchouc naturel et/ou ces polyisoprènes de synthèse avec d'autres élastomères diéniques fortement insaturés, notamment avec des élastomères SBR ou BR tels que précités.

La gaine de caoutchouc du câble de l'invention peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères, par exemple des polymères thermoplastiques, ces polymères autres qu'élastomères étant alors présents à titre de polymère minoritaire.

Bien que la composition de caoutchouc de ladite gaine soit préférentiellement dépourvue de tout plastomère et qu'elle ne comporte qu'un élastomère (ou mélange d'élastomères) diénique(s) comme base polymérique, ladite composition pourrait aussi comprendre au moins un plastomère selon une fraction massique xₚ inférieure à la fraction massique xₑ du(des) élastomère(s). Dans un tel cas, on a de préférence la relation suivante : 0 < xₚ < 0,5. xₑ, et plus préférentiellement: 0 < xₚ < 0,1. xₑ.

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, plus préférentiellement compris entre 1 et 8 pce, l'accélérateur primaire de vulcanisation, par exemple un sulfénamide, est utilisé à un taux préférentiel compris entre 0,5 et 10 pce, plus préférentiellement compris entre 0,5 et 5,0 pce.

La composition de caoutchouc de la gaine selon l'invention comprend, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en œuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

De préférence, la composition de la gaine de caoutchouc présente, à l'état réticulé, un module sécant en extension à 10% d'allongement (noté M10), mesuré selon la norme ASTM D 412 de 1998, inférieur à 20 MPa et plus préférentiellement inférieur à 12 MPa, en particulier entre 4 et 11 MPa.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

De préférence, ladite composition est à base de caoutchouc naturel et elle comprend du noir de carbone à titre de charge renforçante, par exemple un noir de carbone de grade (ASTM) 300, 600 ou 700 (par exemple N326, N330, N347, N375, N683, N772).

Selon une autre variante avantageuse de l'invention, l'épaisseur de mélange caoutchouteux entre la surface intérieure de la cavité du pneumatique et le point d'un élément de renforcement métallique de l'armature de carcasse le plus proche de la dite surface intérieure de la cavité étant inférieure ou égale à 3.2 mm.

Les mesures d'épaisseur de mélange caoutchouteux sont effectuées sur une coupe transversale d'un pneumatique, le pneumatique étant donc dans un état non gonflé.

L'épaisseur de mélange caoutchouteux entre l'armature de carcasse et la cavité du pneumatique ainsi réduite par rapport à des pneumatiques usuelles et celle-ci constituant un des composants les plus onéreux du pneumatique, le coût de fabrication du pneumatique peut encore être réduit par rapport à celui d'un pneumatique usuel. Les inventeurs ont encore su mettre en évidence que les améliorations obtenues en termes de performance d'endurance du pneumatique notamment au regard des phénomènes de "fatigue-corrosion" ou de "fatigue-fretting-corrosion" permettent de réduire l'épaisseur des mélanges caoutchouteux entre l'armature de carcasse et la cavité du pneumatique en conservant des propriétés d'endurance satisfaisantes.

Selon un mode de réalisation préféré de l'invention, le mélange caoutchouteux entre la cavité du pneumatique et les éléments de renforcement de la couche d'armature de carcasse radialement la plus à l'intérieure étant constitué d'au moins deux couches de mélange caoutchouteux, la couche de mélange caoutchouteux radialement la plus à l'intérieur présente une épaisseur inférieure ou égale à 1.5 mm. Comme expliqué précédemment, cette couche est habituellement pour partie composée de butyle de façon à augmenter l'étanchéité du pneumatique et ce type de matériau présentant un coût non négligeable, la diminution de cette couche est favorable.

De préférence encore selon l'invention, la couche de mélange caoutchouteux radialement adjacente à la couche de mélange caoutchouteux radialement la plus à l'intérieur présente une épaisseur inférieure ou égale à 1.7 mm. L'épaisseur de cette couche dont les constituants permettent notamment de fixer l'oxygène de l'air peut également être réduite de façon à diminuer encore le coût du pneumatique.

Les épaisseurs de chacune de ces deux couches sont égales à la longueur de la projection orthogonale d'un point d'une surface sur l'autre surface de ladite couche.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

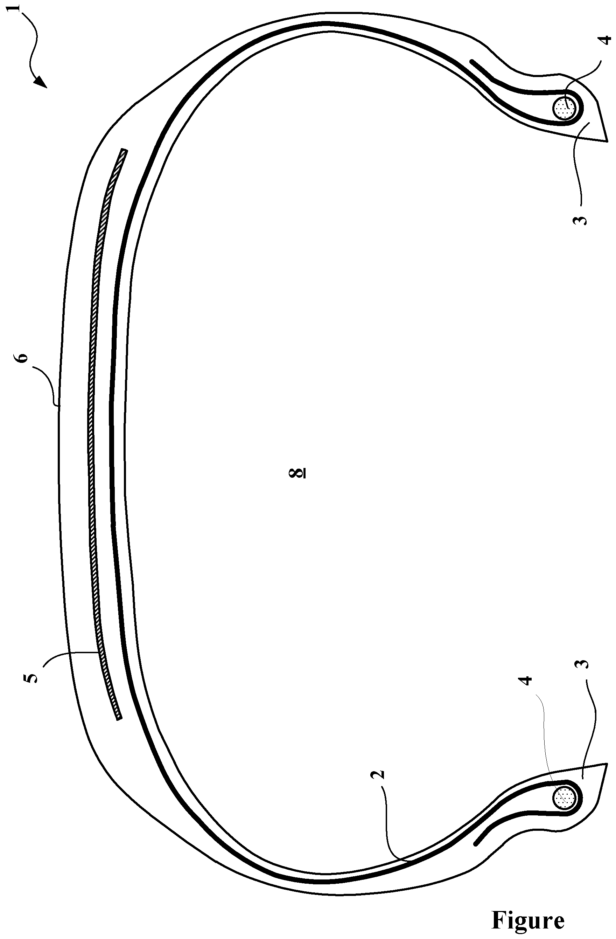

D'autres détails et caractéristiques avantageux de l'invention ressortiront ci-après de la description des exemples de réalisation de l'invention en référence à la figure qui représente une vue méridienne d'un schéma d'un pneumatique selon un mode de réalisation de l'invention.

La figure n'est pas représentée à l'échelle pour en simplifier la compréhension.

Sur la figure, le pneumatique 1, de dimension 295/80 R 22.5, comprend une armature de carcasse radiale 2 ancrée dans deux bourrelets 3, autour de tringles 4. L'armature de carcasse 2 est formée d'une seule couche de câbles métalliques et de deux couches de calandrage. L'armature de carcasse 2 est frettée par une armature de sommet 5, elle-même coiffée d'une bande de roulement 6. L'armature de sommet 5 est formée radialement de l'intérieur à l'extérieur :
- d'une couche de triangulation formée de câbles métalliques inextensibles 9.28 non frettés, orientés d'un angle égal à 65°,
- d'une première couche de travail formée de câbles métalliques inextensibles 11.35 non frettés, continus sur toute la largeur de la nappe, orientés d'un angle égal à 26°,
- d'une seconde couche de travail formée de câbles métalliques inextensibles 11.35 non frettés, continus sur toute la largeur de la nappe, orientés d'un angle égal à 18° et croisés avec les câbles métalliques de la première couche de travail,
- d'une couche de protection formée de câbles métalliques élastiques 6.35 non frettés, continus sur toute la largeur de la nappe, orientés d'un angle égal à 18° dans le même sens que les câbles métalliques de la seconde couche de travail.

L'ensemble de ces couches constituant l'armature de sommet 5 n'est pas représenté en détail sur les figures.

Les câbles d'armature de carcasse du pneumatique 1 sont des câbles à couche de structure 1+6+12, non fretté, constitué d'un noyau central formé d'un fil, d'une couche intermédiaire formée de six fils et d'une couche externe formée de douze fils.

Il présente les caractéristiques suivantes (d et p en mm) :
- structure 1+6+12 ;
- d₁ = 0.17 (mm);
- d₂ = 0.15 (mm);
- p₂ = 10 (mm)
- d₃ = 0.15 (mm);
- p₂ = 10 (mm),
- (d₂/d₃) = 1 ;
avec d₂, p₂, respectivement le diamètre et le pas d'hélice de la couche intermédiaire et d₃ et p₃, respectivement le diamètre et le pas de d'hélice des fils de la couche externe.

Le diamètre des câbles d'armature de carcasse est égal à 0.77 mm.

Les fils d'acier constituant les câbles d'armature de carcasse présentent un taux de carbone en masse C égal à 0.21%.

La contrainte maximale avant rupture des fils d'acier constituant les câbles d'armature de carcasse est égale à 2850 MPa.

Au test dit de perméabilité, les câbles extraits du pneumatique présentent un débit supérieur à 20 cm³/min.

La force rupture des câbles d'armature de carcasse est égale à 80 daN.

La couche d'armature de carcasse 2 est formée des câbles décrits ci-dessus répartis avec un pas égal à 1.2 mm.

La force rupture par unité de largeur de la couche d'armature de carcasse est égale à 66.7 daN/mm.

Des essais ont été réalisés avec des pneumatiques P réalisés selon l'invention conformément à la représentation de la figure, et d'autres avec des pneumatiques R dits de référence.

Ces pneumatiques de référence R diffèrent des pneumatiques P selon l'invention par des câbles de structure 1+6+12, présentant les caractéristiques suivantes (d et p en mm) :
- d₁ = 0.20 (mm);
- d₂ = 0.18 (mm);
- p₂ = 10 (mm)
- d₃ = 0.18 (mm);
- p₂ = 10 (mm),
- (d₂/d₃) = 1;
avec d₂, p₂, respectivement le diamètre et le pas d'hélice de la couche intermédiaire et d₃ et p₃, respectivement le diamètre et le pas de d'hélice des fils de la couche externe.

Les câbles de l'armature de carcasse des pneumatiques de référence R présentent un diamètre de 0.9 mm et sont répartis avec un pas égal à 1.4 mm, les fils d'acier constituant les câbles d'armature de carcasse présentant un taux de carbone en masse C égal à 0.58 % et une contrainte maximale avant rupture égale à 2830 MPa.

La force rupture des câbles d'armature de carcasse des pneumatiques de référence R est égale à 118 daN.

La force rupture par unité de largeur de la couche d'armature de carcasse des pneumatiques de référence R est égale à 84.3 daN/mm.

La variation de la masse ainsi obtenue selon l'invention en comparaison avec les pneumatiques R est égale à 0.9 Kg. Cela correspond à un gain en masse de 1.5 % par rapport à la masse globale du pneumatique. Le coût du pneumatique est ainsi diminué de 1.5 %.

Le kilométrage parcouru est mesuré jusqu'à ce que le pneumatique présente une dégradation. Les mesures illustrées ci-dessous sont ramenées à une base 100 pour le pneumatique de référence.

| | R | P |
|---|---|---|
| Km | 100 | 165 |

Ces résultats montrent que dans des conditions de roulage particulièrement sévères, les pneumatiques selon l'invention sont plus performants en termes d'endurance que les pneumatiques de référence. Les défaillances de ces derniers sont dues à une oxydation localisée des câbles de l'armature de carcasse. De tels défauts n'apparaissent dans les pneumatiques selon l'invention qu'à des kilométrages plus élevés.

## Revendications

1. Pneumatique à armature de carcasse radiale, constituée d'au moins une couche d'éléments de renforcement métalliques, dont le diamètre au seat est strictement supérieur à 19.5 pouces, ledit pneumatique comprenant une armature de sommet, elle-même coiffée radialement d'une bande de roulement, ladite bande de roulement étant réunie à deux bourrelets par l'intermédiaire de deux flancs, **caractérisé en ce que** les éléments de renforcement métalliques de ladite au moins une couche de l'armature de carcasse sont des câbles à couches constitués de plusieurs fils d'acier présentant un taux de carbone en masse C tel que 0.01 % ≤ C < 0.4 %, **en ce que** ladite au moins une couche d'armature de carcasse présente une force rupture par unité de largeur comprise entre 35 daN/mm et 75 daN/mm et **en ce que** le diamètre desdits câbles est supérieur à 0.7 mm.

2. Pneumatique selon la revendication 1, **caractérisé en ce que** lesdits fils d'acier présentent une contrainte maximale avant rupture R, exprimée en MPa, telle que R ≥ 175 + 930.C - 600.ln(d) et R ≥ 1500 MPa; d étant le diamètre desdits fils d'acier.

3. Pneumatique selon la revendication 1 ou 2, **caractérisé en ce que** lesdits fils d'acier présentent un taux de chrome en masse Cr tel que Cr < 12 %.

4. Pneumatique selon l'une des revendications précédentes, **caractérisé en ce que** les éléments de renforcement métalliques d'au moins une couche de l'armature de carcasse sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20.

5. Pneumatique selon la revendication 4, **caractérisé en ce que** le diamètre des fils de la première couche (C1) est compris entre 0.10 et 0.4 mm, et **en ce que** le diamètre des fils des couches (C2, C3) est compris entre 0.10 et 0.4 mm.

6. Pneumatique selon l'une des revendications précédentes, **caractérisé en ce que** les éléments de renforcement métalliques de ladite au moins une couche de l'armature de carcasse sont des câbles non frettés présentant au test dit de perméabilité un débit inférieur à 20 cm3/min.

7. Pneumatique selon la revendication 6, **caractérisé en ce que** les éléments de renforcement métalliques de ladite au moins une couche de l'armature de carcasse sont des câbles à au moins deux couches et **en ce qu'**au moins une couche interne est gainée d'une couche constituée d'une composition de caoutchouc réticulable ou réticulée, de préférence à base d'au moins un élastomère diénique.

8. Pneumatique selon la revendication 6 ou 7, **caractérisé en ce que** les câbles présentent au test dit de perméabilité un débit inférieur à 10 cm3/min et de préférence inférieur à 2 cm3/min.

9. Pneumatique selon l'une des revendications précédentes, **caractérisé en ce que** l'épaisseur de mélange caoutchouteux entre la surface intérieure de la cavité du pneumatique et le point d'un élément de renforcement métallique de l'armature de carcasse le plus proche de ladite surface intérieure de la cavité est inférieure à 3.2 mm.

10. Pneumatique selon l'une des revendications précédentes, le mélange caoutchouteux entre la cavité du pneumatique et les éléments de renforcement de la couche d'armature de carcasse radialement la plus à l'intérieure étant constitué d'au moins deux couches de mélange caoutchouteux, **caractérisé en ce que** la couche de mélange caoutchouteux radialement la plus à l'intérieur présente une épaisseur inférieure à 1.5 mm.

11. Pneumatique selon l'une des revendications précédentes, le mélange caoutchouteux entre la cavité du pneumatique et les éléments de renforcement de la couche d'armature de carcasse radialement la plus à l'intérieure étant constitué d'au moins deux couches de mélange caoutchouteux, **caractérisé en ce que** la couche de mélange caoutchouteux radialement adjacente à la couche de mélange caoutchouteux radialement la plus à l'intérieur présente une épaisseur inférieure à 1.7 mm.

12. Pneumatique selon l'une des revendications précédentes, **caractérisé en ce que** l'armature de sommet est formée d'au moins deux couches de sommet de travail d'éléments de renforcement, croisés d'une couche à l'autre en faisant avec la direction circonférentielle des angles compris entre 10° et 45°.

13. Pneumatique selon l'une des revendications précédentes, **caractérisé en ce que** l'armature de sommet comporte encore au moins une couche d'éléments de renforcement circonférentiels.

14. Pneumatique selon l'une des revendications précédentes, **caractérisé en ce que** l'armature de sommet est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

15. Pneumatique selon l'une des revendications précédentes, **caractérisé en ce que** l'armature de sommet comporte en outre une couche de triangulation formée d'éléments de renforcement métalliques faisant avec la direction circonférentielle des angles supérieurs à 60°.

## Patentansprüche

1. Luftreifen mit radialer Karkassenbewehrung, die aus mindestens einer Schicht metallischer Verstärkungselemente besteht, deren Durchmesser an der Felgenschulter streng größer als 19,5 Zoll ist, wobei der Luftreifen eine Scheitelbewehrung enthält, die selbst radial von einem Laufstreifen bedeckt ist, wobei der Laufstreifen mittels zweier Flanken mit zwei Wülsten verbunden ist, **dadurch gekennzeichnet, dass** die metallischen Verstärkungselemente der mindestens einen Schicht der Karkassenbewehrung Schichtkabel sind, die aus mehreren Stahldrähten bestehen, die einen derartigen Kohlenstoff-Massenanteil C haben, dass gilt 0,01% ≤ C < 0,4%, dass die mindestens eine Karkassenbewehrungsschicht eine Reißkraft pro Breiteneinheit zwischen 35 daN/mm und 75 daN/mm aufweist, und dass der Durchmesser der Kabel größer als 0,7 mm ist.

2. Luftreifen nach Anspruch 1, **dadurch gekennzeichnet, dass** die Stahldrähte eine derartige maximale Spannung vor Bruch R, ausgedrückt in MPa, haben, dass gilt R ≥ 175 + 930.C - 600.1n(d) und R ≥ 1500 MPa; wobei d der Durchmesser der Stahldrähte ist.

3. Luftreifen nach Anspruch 1 oder 2, **dadurch gekennzeichnet, dass** die Stahldrähte einen solchen Chrom-Massenanteil Cr haben, dass gilt Cr < 12%.

4. Luftreifen nach einem der vorhergehenden Ansprüche, **dadurch gekennzeichnet, dass** die metallischen Verstärkungselemente mindestens einer Schicht der Karkassenbewehrung Metallkabel mit Aufbauschichten [L+M] oder [L+M+N] sind, verwendbar als Verstärkungselement einer Karkassenbewehrung eines Luftreifens, die eine erste Schicht C1 mit L Drähten eines Durchmessers d₁ mit L von 1 bis 4 aufweisen, die von mindestens einer Zwischenschicht C2 mit M Drähten eines Durchmessers d₂ umgeben ist, die gemäß einer Steigung p₂ wendelförmig zusammengewickelt sind, mit M von 3 bis 12, wobei die Schicht C2 ggf. von einer Außenschicht C3 von N Drähten eines Durchmessers d₃ umgeben ist, die gemäß einer Steigung p₃ wendelförmig zusammengewickelt sind, mit N von 8 bis 20.

5. Luftreifen nach Anspruch 4, **dadurch gekennzeichnet, dass** der Durchmesser der Drähte der ersten Schicht (C1) zwischen 0,10 und 0,4 mm liegt, und dass der Durchmesser der Drähte der Schichten (C2, C3) zwischen 0,10 und 0,4 mm liegt.

6. Luftreifen nach einem der vorhergehenden Ansprüche, **dadurch gekennzeichnet, dass** die metallischen Verstärkungselemente der mindestens einen Schicht der Karkassenbewehrung nicht bandagierte Kabel sind, die beim so genannten Permeabilitätstest einen Durchsatz von weniger als 20 cm³/min aufweisen.

7. Luftreifen nach Anspruch 6, **dadurch gekennzeichnet, dass** die metallischen Verstärkungselemente der mindestens einen Schicht der Karkassenbewehrung Kabel mit mindestens zwei Schichten sind, und dass mindestens eine innere Schicht von einer Schicht umhüllt ist, die aus einer vernetzbaren oder vernetzten Kautschukzusammensetzung besteht, vorzugsweise auf der Basis von mindestens einem Dienelastomer.

8. Luftreifen nach Anspruch 6 oder 7, **dadurch gekennzeichnet, dass** die Kabel beim sogenannten Permeabilitätstest einen Durchsatz von weniger als 10 cm³/min und vorzugsweise weniger als 2 cm³/min aufweisen.

9. Luftreifen nach einem der vorhergehenden Ansprüche, **dadurch gekennzeichnet, dass** die Dicke der Kautschukmischung zwischen der Innenfläche des Hohlraums des Luftreifens und dem Punkt eines metallischen Verstärkungselements der Karkassenbewehrung, der der Innenfläche des Hohlraums am nächsten liegt, geringer als 3,2 mm ist.

10. Luftreifen nach einem der vorhergehenden Ansprüche, wobei die Kautschukmischung zwischen dem Hohlraum des Luftreifens und den Verstärkungselementen der radial am weitesten innen liegenden Karkassenbewehrungsschicht aus mindestens zwei Kautschukmischungsschichten besteht, **dadurch gekennzeichnet, dass** die radial am weitesten innen liegende Kautschukmischungsschicht eine Dicke von weniger als 1,5 mm aufweist.

11. Luftreifen nach einem der vorhergehenden Ansprüche, wobei die Kautschukmischung zwischen dem Hohlraum des Luftreifens und den Verstärkungselementen der radial am weitesten innen liegenden Karkassenbewehrungsschicht aus mindestens zwei Kautschukmischungsschichten besteht, **dadurch gekennzeichnet, dass** die der radial am weitesten innen liegenden Kautschukmischungsschicht radial benachbarte Kautschukmischungsschicht eine Dicke von weniger als 1,7 mm aufweist.

12. Luftreifen nach einem der vorhergehenden Ansprüche, **dadurch gekennzeichnet, dass** die Scheitelbewehrung von mindestens zwei Arbeitsscheitelschichten von Verstärkungselementen gebildet ist, die sich von einer Schicht zur anderen kreuzen und mit der Umfangsrichtung Winkel zwischen 10° und 45° bilden.

13. Luftreifen nach einem der vorhergehenden Ansprüche, **dadurch gekennzeichnet, dass** die Scheitelbewehrung noch mindestens eine Schicht von Umfangsverstärkungselementen aufweist.

14. Luftreifen nach einem der vorhergehenden Ansprüche, **dadurch gekennzeichnet, dass** die Scheitelbewehrung radial außen von mindestens einer zusätzlichen so genannten Schutzlage aus sogenannten elastischen Verstärkungselementen vervollständigt wird, die bezüglich der Umfangsrichtung mit einem Winkel zwischen 10° und 45° und von gleicher Richtung wie der von den nicht dehnbaren Elementen der ihr radial benachbarten Arbeitslage gebildete Winkel ausgerichtet sind.

15. Luftreifen nach einem der vorhergehenden Ansprüche, **dadurch gekennzeichnet, dass** die Scheitelbewehrung außerdem eine Triangulationsschicht aufweist, die von metallischen Verstärkungselementen gebildet wird, die mit der Umfangsrichtung Winkel von mehr als 60° bilden.

## Claims

1. Tyre having a radial carcass reinforcement, consisting of at least one layer of metal reinforcing elements, the seat diameter of which is strictly greater than 19.5 inches, said tyre comprising a crown reinforcement, itself capped radially with a tread, said tread being joined to two beads via two sidewalls, **characterized in that** the metal reinforcing elements of said at least one layer of the carcass reinforcement are layered cords consisting of several steel threads having a weight content of carbon C such that 0.01% ≤ C ≤ 0.4%, **in that** said at least one carcass reinforcement layer having a breaking force per unit width of between 35 daN/mm and 75 daN/mm and **in that** the diameter of said cords is greater than 0.7mm.

2. Tyre according to Claim 1, **characterized in that** said steel threads have a maximum tensile strength R, expressed in MPa, such that R ≥ 175 + 930.C - 600.ln(d) and R ≥ 1500 MPa, d being the diameter of said steel threads.

3. Tyre according to Claim 1 or 2, **characterized in that** said steel threads have a weight content of chromium Cr such that Cr < 12%.

4. Tyre according to one of the preceding claims, **characterized in that** the metal reinforcing elements of at least one layer of the carcass reinforcement are layered metal cords of [L+M] or [L+M+N] construction of use as reinforcing element in a tyre carcass reinforcement, comprising a first layer C1 of L threads of diameter d₁, with L ranging from 1 to 4, surrounded by at least one intermediate layer C2 of M threads of diameter d₂ wound together in a helix at a pitch p₂, with M ranging from 3 to 12, said layer C2 possibly being surrounded by an outer layer C3 of N threads of diameter d₃ wound together in a helix at a pitch p₃, with N ranging from 8 to 20.

5. Tyre according to Claim 4, **characterized in that** the diameter of the threads of the first layer (C1) is between 0.10 and 0.4 mm, and **in that** the diameter of the threads of the layers (C2, C3) is between 0.10 and 0.4 mm.

6. Tyre according to one of the preceding claims, **characterized in that** the metal reinforcing elements of said at least one layer of the carcass reinforcement are non-wrapped cords exhibiting, in the "permeability" test, a flow rate of less than 20 cm³/min.

7. Tyre according to Claim 6, **characterized in that** the metal reinforcing elements of said at least one layer of the carcass reinforcement are cords having at least two layers and **in that** at least one inner layer is sheathed with a layer consisting of a rubber composition which is crosslinkable or crosslinked, preferably based on at least one diene elastomer.

8. Tyre according to Claim 6 or 7, **characterized in that** the cords exhibit, in the "permeability" test, a flow rate of less than 10 cm³/min and preferably of less than 2cm³/min.

9. Tyre according to one of the preceding claims, **characterized in that** the thickness of rubber compound between the inner surface of the tyre cavity and the point of a metal reinforcing element of the carcass reinforcement that is closest to said inner surface of the cavity is less than 3.2 mm.

10. Tyre according to one of the preceding claims, the rubber compound between the tyre cavity and the reinforcing elements of the radially innermost carcass reinforcement layer consisting of at least two layers of rubber compound, **characterized in that** the radially innermost layer of rubber compound has a thickness of less than 1.5 mm.

11. Tyre according to one of the preceding claims, the rubber compound between the tyre cavity and the reinforcing elements of the radially innermost carcass reinforcement layer consisting of at least two layers of rubber compound, **characterized in that** the radially innermost layer of rubber compound has a thickness of less than 1.7 mm.

12. Tyre according to one of the preceding claims, **characterized in that** the crown reinforcement is formed of at least two working crown layers of reinforcing elements that are crossed from one layer to the other and form, with the circumferential direction, angles of between 10° and 45°.

13. Tyre according to one of the preceding claims, **characterized in that** the crown reinforcement further comprises at least one layer of circumferential reinforcing elements.

14. Tyre according to one of the preceding claims, **characterized in that** the crown reinforcement is supplemented radially on the outside by at least one additional ply, referred to as a protective ply, of reinforcing elements, referred to as elastic reinforcing elements, that are oriented with respect to the circumferential direction at an angle of between 10° and 45° and in the same direction as the angle formed by the inextensible elements of the working ply which is radially adjacent thereto.

15. Tyre according to one of the preceding claims, **characterized in that** the crown reinforcement also comprises a triangulation layer formed of metal reinforcing elements that form angles of more than 60° with the circumferential direction.
